# EUROPEAN PATENT APPLICATION

(11) **EP 3 854 840 A1**
(43) Date of publication of application: **28.07.2021**
(21) Application number: 21153137.1
(22) Date of filing: 25.01.2021
(51) Int. Cl.: C08J 9/00, C08G 18/00

(54) **SOUND ABSORBING URETHANE FOAM**

(30) Priority: 27.01.2020 JP 2020010813; 02.11.2020 JP 2020183798
(71) Applicant: Toyo Quality One Corporation, Saitama 350-0812 (JP)
(72) Inventor: IWAKI, Shigeru, Saitama, 350-0812 (JP); SUEYA, Akira, Saitama, 350-0812 (JP); MATSUMOTO, Noriyuki, Saitama, 350-0812 (JP)
(74) Representative: AWA Sweden AB

(57) **Abstract**

According to one embodiment, a sound absorbing urethane foam is provided. In the sound absorbing urethane foam, a normal incidence sound absorbing coefficient at a time when a diameter is 29 mm and a thickness is 10 mm is 40% or more in an entire range of frequencies of 1000 Hz to 3150 Hz.

## Description

### FIELD

The present invention relates to a sound absorbing urethane foam.

### BACKGROUND

Conventionally, in order to secure the safety of a passenger against the shock from the outside during the driving of an automobile, shock absorbing members are attached to the inside of doors of the automobile, to the region of the ceiling and to the inside of pillars. As the shock absorbing members, for example, there are known those formed of hard polyurethane foam, and a foam of thermoplastic resin beads.

In addition, in modern automobiles, there is a demand for the control of noise such as engine sound and tire running noise, and for the enhancement of quietness in the automobile. However, since the above-described hard polyurethane foam and the foam of thermoplastic resin beads are generally formed of closed-cell structures, there is a problem that these are poor in sound absorbing performance. A technology is known for imparting an open-cell structure to the hard polyurethane foam and the foam of thermoplastic resin beads, but it is difficult to impart an excellent sound absorbing performance in a wide frequency range when the thickness thereof is small.

### CITATION LIST

### PATENT LITERATURE

PATENT LITERATURE 1: Jpn. Pat. Appln. KOKAI Publication No. 2013-047338
PATENT LITERATURE 2: Jpn. Pat. Appln. KOKAI Publication No. 2005-272806
PATENT LITERATURE 3: Jpn. Pat. No. 4461453 SUMMARY

An object of the present disclosure is to provide a sound absorbing urethane foam having an excellent sound absorbing performance.

According to one embodiment, a sound absorbing urethane foam is provided. In the sound absorbing urethane foam, a normal incidence sound absorbing coefficient at a time when a diameter is 29 mm and a thickness is 10 mm is 40% or more in an entire range of frequencies of 1000 Hz to 3150 Hz.

According to the present invention, it can be provided that a sound absorbing urethane foam having an excellent sound absorbing performance.

### BRIEF DESCRIPTION OF THE DRAWINGS

FIG. 1 is a plan view schematically illustrating an example of a sound absorbing urethane foam;
FIG. 2 is a cross-sectional view schematically illustrating a cross section, taken along line II-II, of the sound absorbing urethane foam shown in FIG. 1;
FIG. 3 is a cross-sectional view schematically illustrating a cross section, taken along line III-III, of the sound absorbing urethane foam shown in FIG. 1;
FIG. 4 is a view schematically illustrating a state in which sound waves propagate through a porous elastic material;
FIG. 5 a view schematically illustrating a state in which an incident wave entering a skeleton of the porous elastic material attenuates;
FIG. 6 is a sound absorbing coefficient graph showing measurement results of normal incidence sound absorbing coefficients of sound absorbing urethane foams according to Examples;
FIG. 7 is a sound absorbing coefficient graph showing measurement results of normal incidence sound absorbing coefficients of sound absorbing urethane foams according to Examples;
FIG. 8 is a sound absorbing coefficient graph showing measurement results of normal incidence sound absorbing coefficients of sound absorbing urethane foams according to Examples;
FIG. 9 is a sound absorbing coefficient graph showing measurement results of normal incidence sound absorbing coefficients of sound absorbing urethane foams according to Examples; and
FIG. 10 is a sound absorbing coefficient graph showing measurement results of normal incidence sound absorbing coefficients of sound absorbing urethane foams according to Examples.

### DETAILED DESCRIPTION

A floor of a general automobile is equipped with a lower-limb shock absorbing member. Conventionally, main materials of the lower-limb shock absorbing member are foamed polypropylene and foamed polyethylene, which are excellent in shock absorbing performance. However, hard urethane foam having both a shock absorbing performance and a sound absorbing performance is also used. The hard urethane foam has, for example, a feature that the hard urethane foam is lighter than, and has a higher strength than, the foamed polypropylene.

The noise, which a passenger senses in the inside of an automobile has a high sound pressure level in a low frequency range. Therefore, the shock absorbing member, which is provided in the automobile, is required to have not only a predetermined shock absorbing performance (buckling), but also an excellent sound absorbing performance, for example, in a low frequency range. In recent years, in order to realize a wide inside space in the automobile, and in order to reduce the weight of the vehicle, there is a strong demand for a decrease in thickness of the shock absorbing member. In other words, there is a demand for the realization of an excellent sound absorbing performance and a practical shock absorbing performance, by a shock absorbing member with a minimum possible thickness.

A sound absorbing urethane foam according to an embodiment has a normal incidence sound absorbing coefficient of 40% or more in an entire range of frequencies of 1000 Hz to 3150 Hz, when the sound absorbing urethane foam has a diameter of 29 mm and a thickness of 10 mm. For example, as a result of normal incidence sound absorbing coefficient measurement conducted on a mass with a diameter of 29 mm and a thickness of 10 mm, the normal incidence sound absorbing coefficient is 40% or more in the entire range of frequencies of 1000 Hz to 3150 Hz. This mass may be at least a part of the sound absorbing urethane foam according to the embodiment. Specifically, the mass is a sound absorbing urethane foam itself, or a urethane foam which is cut out in a columnar shape with a thickness of 10 mm and a diameter of 29 mm from a sound absorbing urethane foam having such a size that the columnar shape with the thickness of 10 mm and the diameter of 29 mm can be cut out. In the present specification, "normal incidence sound absorbing coefficient" is abbreviated to "sound absorbing coefficient" in some cases.

It can be said that the sound absorbing urethane foam, which has the normal incidence sound absorbing coefficient of 40% or more in the entire range of frequencies of 1000 Hz to 3150 Hz with the small thickness of 10 mm, has an excellent sound absorbing performance. It is preferable that the sound absorbing urethane foam has a design surface. The design surface refers to, for example, a surface that was put in contact with an upper die of a mold at a time of molding when the urethane foam was obtained by mold forming. The design surface is also called "skin" or "skin surface". Whether the sound absorbing urethane foam has a design surface or not can be judged by observing a surface and/or a cross section of the sound absorbing urethane foam by scanning electron microscopy (SEM).

### <Measuring Method of Normal Incidence Sound Absorbing Coefficient>

To begin with, as a measurement target of a sound absorbing coefficient, a urethane foam mass having a columnar shape with a diameter of 29 mm (29ϕ) and a thickness of 10 mm is prepared. The mass is fabricated by mold forming with use of such a mold that the thickness of the mass becomes 10 mm. The mass can be prepared by using a punching machine including a punch die of 29ϕ. Five such masses are prepared in order to calculate an average value of measurement results of the sound absorbing coefficient.

As a measuring apparatus of sound absorbing coefficients, use is made of Normal Incidence Acoustic Measurement System Model 9301 of Acoustic Duct-Transfer Function Method manufactured by RION Co., Ltd., or an apparatus having an equivalent function to this apparatus. The normal incidence acoustic measurement system can measure a sound absorbing coefficient of a material, acoustic impedance-related items, and a transmission loss, by making sound normally incident on a sound absorbing material or a sound insulating material within an acoustic duct and capturing reflected sound or transmissive sound. The normal incidence acoustic measurement system is started, a microphone is calibrated, and the preparation for sound absorbing coefficient measurement is completed.

A mass is set in a predetermined position in the duct in such a manner that sound is incident along a direction parallel to the thickness direction of the mass, and the sound absorbing coefficient is measured. The sound absorbing coefficient measurement is performed according to JIS A 1405: 1994. When the mass has a design surface, the mass is set such that sound is incident on the design surface.

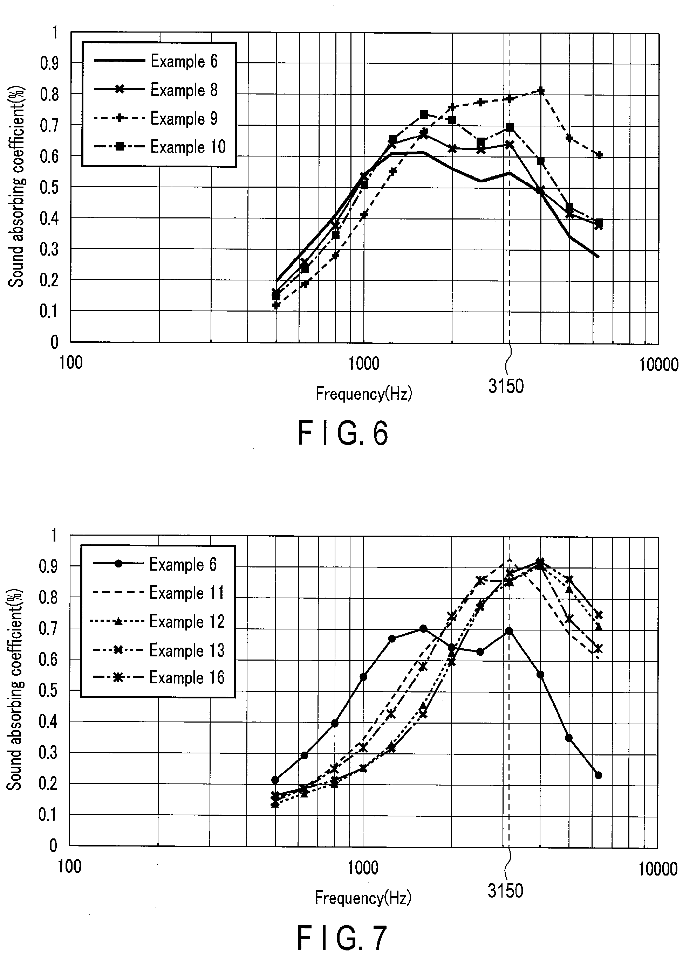

Then, normal incidence absorbing coefficients in cases where the frequency is 500 Hz, 630 Hz, 800 Hz, 1000 Hz, 1250 Hz, 1600 Hz, 2000 Hz, 2500 Hz, 3150 Hz, 4000 Hz, 5000 Hz, and 6300 Hz are measured. This measurement is conducted on the five masses, respectively, and the average value of normal incidence absorbing coefficients at the respective frequencies is calculated. Thereby, the normal incidence absorbing coefficient at each frequency can be determined. Based on the measurement result, a sequential line graph indicating the frequency (Hz) in the abscissa axis and the sound absorption coefficient (%) in the ordinate axis can be created. In the present specification, the sequential line graph is referred to as "sound absorbing coefficient graph". Sound absorbing coefficient graphs in FIG. 6 to FIG. 10, which will be described later, are logarithmic graphs.

As regards the mass of the target of measurement, when the sound absorbing coefficient is 40% or more at all frequencies of 1000 Hz, 1250 Hz, 1600 Hz, 2000 Hz, 2500 Hz and 3150 Hz, it can be regarded that the normal incidence sound absorbing coefficient is 40% or more in the entire range of frequencies of 1000 Hz to 3150 Hz.

As a result of the normal incidence sound absorbing coefficient measurement, the sound absorbing urethane foam preferably has a normal incidence sound absorbing coefficient of 45% or more, and more preferably has a normal incidence sound absorbing coefficient of 50% or more, in the entire range of frequencies of 1000 Hz to 3150 Hz. When the sound absorbing urethane foam is used as the lower-limb shock absorbing member of an automobile or the like, the passenger of the automobile or the like is less sensitive to noise in a low frequency range as the sound absorbing coefficient in the entire range of frequencies of 1000 Hz to 3150 Hz is higher. Therefore the passenger can feel comfortable during driving. The low frequency range refers to, for example, a frequency range of 1000 Hz to 3150 Hz.

From the standpoint of the effective absorption of noise in the low frequency range, the sound absorbing urethane foam preferably has a peak of the sound absorbing coefficient at frequencies of 1000 Hz to 2000 Hz in the sound absorbing coefficient graph obtained as a result of the normal incidence sound absorbing coefficient measurement. In this case, the sound absorbing coefficient at, for example, 500 Hz to 2000 Hz is excellent. For example, as indicated in a sound absorbing graph shown in FIG. 6, in Example 8 that is one Example, the most excellent sound absorbing coefficient is exhibited at the frequency of 1600 Hz. In other words, in Example 8, the peak of the sound absorbing coefficient is at the frequency of 1600 Hz. Therefore, the sound absorbing urethane foam according to Example 8 can effectively absorb noise in the frequency range of 500 Hz to 2000 Hz.

The shape and size of the sound absorbing urethane foam are not particularly limited. The sound absorbing urethane foam includes, for example, a part having a thickness of 15 mm or less. The normal incidence sound absorbing coefficient measurement is conducted, for example, on a mass extracted from the part having the thickness of 15 mm or less. As regards the sound absorbing urethane foam, even in the part with the thickness of 15 mm or less, it is preferable that the normal incidence sound absorbing coefficient at a time when the diameter is 29 mm and the thickness is 10 mm is 40% or more in the entire range of frequencies of 1000 Hz to 3150 Hz. The mass has, for example, a columnar shape with a diameter of 29 mm and a thickness of 10 mm.

The sound absorbing urethane foam includes, in one example, a part having a thickness of 10 mm or more, but may not include the part having the thickness of 10 mm or more. In this case, when a mass for measuring the normal incidence sound absorbing coefficient of the sound absorbing urethane foam is prepared, a urethane foam with a thickness of 10 mm or more is fabricated by the same compounding as this sound absorbing urethane foam, and a mass with a diameter of 29 mm and a thickness of 10 mm is prepared from the fabricated urethane foam, and normal incidence sound absorbing coefficient measurement may be conducted on this mass.

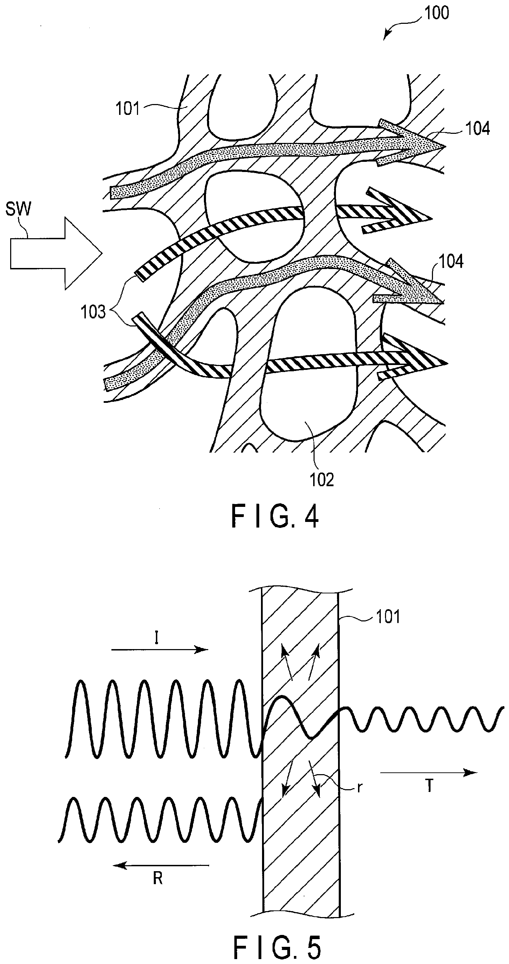

FIG. 4 illustrates a sound propagation model diagram of a porous elastic material such as urethane foam. The sound absorbing urethane foam according to the embodiment has, for example, a porous elastomer structure illustrated in FIG. 4. A porous elastomer 100 is composed of a skeleton 101 having a three-dimensional lattice structure. The skeleton 101 includes an isocyanurate structure including a urea bond and a urethane bond. The isocyanurate structure is a cyclic structure formed by a trimerization reaction of an isocyanate. The porous elastomer 100 includes cavities 102 between lattices constituted by the skeleton 101. The cavity 102 may be an opening. The sizes of the lattices formed by the skeleton 101 are not uniform.

Sound waves SW enter the porous elastomer 100. Vibration propagated by the sound waves SW cause air propagation waves 103 which pass through the cavities 102, and cause solid propagation waves 104 which propagate through the skeleton 101. The air propagation waves 103 and solid propagation waves 104 interact while propagating, and the respective propagation waves are attenuated (absorbed). In addition, as illustrated in FIG. 5, part of the incident waves, which enters the skeleton 101 as the solid propagation wave 104, is converted to thermal energy and thus attenuated. As illustrated in FIG. 5, part of an incident wave I, which is incident on the skeleton 101, impinges on the skeleton 101 and is reflected as a reflected wave R. Other part of the incident wave I, which is incident on the skeleton 101, propagates through the skeleton 101 and is then emitted to the outside of the skeleton 101 from the inside of the skeleton 101 as a transmissive wave T. Further, the wave incident on the skeleton 101 can be converted to thermal energy r while propagating through the skeleton 101.

The sound absorbing coefficient of the sound absorbing urethane foam varies depending on how the skeleton in the sound absorbing urethane foam is constituted. From the standpoint of the sound absorbing coefficient, neither an excessively small ratio nor an excessively large ratio of the cyclic structure in the skeleton is preferable. In order to enhance the sound absorbing performance of the sound absorbing urethane foam, the mixture of the closed-cell structure and the open-cell structure, and not the only closed-cell structure, is effective. When the sound absorbing urethane foam is fabricated by foaming, if an equivalent of a polyol is increased, there is a tendency that membranes do not easily form. In other words, there is a tendency that the open-cell structure is more formed than the close-cell structure. Then, since the part existing as the lattice structure decreases relatively, sound waves propagate less easily through the cavities 102 and are less easily converted to thermal energy, and therefore it is possible that the sound absorbing performance deteriorates.

Paying attention to the air permeability of the sound absorbing urethane foam, for example, by lowering the air permeability of the foam, the conversion of sound waves to thermal energy is promoted, and thus there is a tendency that the sound absorbing performance increases. However, if the air permeability is excessively lowered, the sound wave emitted as the reflected wave increases, and the sound absorbing performance tends to deteriorate.

It is preferable that the air permeability of the sound absorbing urethane foam with the thickness of 10 mm is, for example, 0.5 cc/cm²/sec or more, and 40 cc/cm²/sec or less. By setting the air permeability within this range, a good sound absorbing coefficient can be obtained in the low frequency range. It is more preferable that the air permeability of the sound absorbing urethane foam with the thickness of 10 mm is 10 cc/cm²/sec or more, and 30 cc/cm²/sec or less. The air permeability can be measured according to JIS K6400 7 Method B: 2012.

Materials and compounding for obtaining the sound absorbing urethane foam according to the embodiment will be described. The sound absorbing urethane foam is obtained by foaming, for example, in a reaction system including a polyol, a polyisocyanate, a foaming agent, a catalyst, and an additive. As a manufacturing method, mold forming is preferable from the standpoint of easier control of the structure of cells.

When a polyurethane foam is manufactured by mold forming, a liquid in which a polyol component and a polyisocyanate component are mixed and stirred is poured into a mold. When these components are cured, a foaming reaction and a resinification reaction progress at the same time. Therefore, when the urethane foam including a thin part, for example, a part with a thickness of 10 mm or less, is formed, it is preferable that mold forming properly progresses also in that portion of the mold, which corresponds to this thin part. In other words, it is preferable that the thin part in the obtained urethane foam does not have defects, such as peeling of a skin, underfill, air pockets, and cracks. The sound absorbing urethane foam, which has little defects and can be manufactured with a desired shape, is excellent in moldability. Although the moldability varies due to the influence of various factors, it is preferable that the sound absorbing urethane foam according to the embodiment is excellent also in the moldability of thin parts.

In order to obtain a sound absorbing urethane foam having a normal incidence sound absorbing coefficient of 40% or more in the entire range of frequencies of 1000 Hz to 3150 Hz as a result of normal incidence sound absorbing coefficient measurement, it is preferable that the polyol component (polyol) serving as a material includes polyol B described below. Polyol B has a weight average molecular weight in a range of 4000 to 12000, and has an ethylene oxide content in a range of 5 wt% or more to less than 50 wt%. Polyol B is, for example, polypropylene glycol including a hydroxyl group at its terminal. When polyol B having a weight average molecular weight of 4000 or more is used, the number of crosslinking points at the time of a reaction can be decreased, and therefore the urethane foam with low air permeability can be obtained. The urethane foam with low air permeability is excellent in sound absorbing performance, as described above.

Note that a complex shape includes, for example, a shape including a part with a thickness of 15 mm or less. When the above-described normal incidence sound absorbing coefficient measurement is performed, it is preferable to extract a mass of a measurement target such that the mass includes a part with a thickness of 15 mm or less. The reason for this is that a urethane foam having an excellent sound absorbing performance with respect to such a thin part can be assumed to be a sound absorbing urethane foam that also has an excellent sound absorbing performance as a whole.

If the weight average molecular weight of polyol B exceeds 12000, the viscosity of polyol B is excessively high, and there is a possibility that the molding of the sound absorbing urethane foam cannot be performed. Alternatively, since the molecular chain is long, there is a tendency that the crosslinking density after the molding decreases and the foam becomes excessively soft, and therefore there a possibility that the foam cannot properly be obtained. Note that, at the time of the filing of the present application, a polyol with a weight average molecular weight exceeding 12000 is not commercially available, and is difficult to obtain.

The weight average molecular weight of polyol B is, preferably, in a range of 5000 to 8000, and more preferably, in a range of 6500 to 7500.

Since the ethylene oxide content of polyol B is less than 50 wt%, the retention force of bubbles occurring in a foaming process is high, compared to polyol A to be described later. In addition, when the ethylene oxide content is less than 50 wt%, there is a tendency that membranes easily form in the obtained sound absorbing urethane foam, and thus there is a tendency that the air permeability lowers and the sound absorbing coefficient is excellent in the low frequency range. The reason for this is considered to be that incident waves in the low frequency range are input to the sound absorbing urethane foam with low air permeability, and thereby the incident waves are converted to thermal energy and absorbed in the inside of the sound absorbing urethane foam. By using polyol B, the sound absorbing urethane foam, which is excellent not only in sound absorbing performance but also in moldability, can easily be obtained. The ethylene oxide content of polyol B is, preferably, in a range of 5 wt% to 40 wt%, and more preferably, in a range of 5 wt% to 30 wt%.

It is preferable that polyol B has a terminal ethylene oxide cap structure.

It is preferable that the hydroxyl value of polyol B is 14 mgKOH/g or more and 56 mgKOH/g or less.

It is preferable that the polyol component (polyol) further includes polyol A described below. Polyol A has a weight average molecular weight in a range of 2000 to 12000, and has an ethylene oxide content of 50 wt% or more. Polyol A is, for example, a polyether polyol. Polyol A has a higher polarity than polyol B. Therefore, by using polyol A and polyol B together, a polyurethane foam having a more communicated foam structure than in the case of using only polyol B, can be obtained. In other words, a polyurethane foam having a properly communicated foam structure can be obtained, and such a polyurethane foam is excellent in sound absorbing performance. In addition, since polyol A, too, has a relatively high weight average molecular weight, polyol A contributes to obtaining a sound absorbing urethane foam with excellent moldability.

The weight average molecular weight of polyol A is, preferably, in a range of 6500 to 10000, and more preferably, in a range of 7000 to 9000.

It is preferable that the hydroxyl value of polyol A is 18 mgKOH/g or more and 52 mgKOH/g or less.

The polyol component may include some other polyol, which is different from polyol A and polyol B. An example of the other polyol is a polyether polyol having a weight average molecular weight of 1000 or more, and less than 4000, an ethylene oxide content of less than 5%, and a hydroxyl value of 40 mgKOH/g or more. By compounding the polyether polyol having the weight average molecular weight of less than 4000 as the other polyol, there is an effect that a shock absorbing performance (buckling) can easily be imparted.

In one example, the compounding ratio of polyol A, polyol B and the other polyol in the polyol component (polyol) can be set to 35 wt% to 80 wt%:5 wt% to 40 wt%:5 wt% to 30 wt%. It should be noted, however, that the compounding is performed such that the total of these polyols is 100 wt%. The compounding ratio can be adjusted as appropriate, as far as the normal incidence sound absorbing coefficient of the obtained sound absorbing urethane foam is 40% or more in the entire range of frequencies 1000 Hz to 3150 Hz.

The ratio of the weight of polyol B in the weight of the polyol component (polyol) can be in a range of 5 wt% to 40 wt%. If the ratio of the weight of polyol B in the weight of the polyol component is excessively small, the air permeability of the sound absorbing urethane foam increases to a high level, and it is possible that the sound absorbing coefficient in the range of frequencies of 1000 Hz to 3150 Hz lowers. On the other hand, if the ratio of the weight of polyol B in the weight of the polyol component is excessively large, the air permeability of the sound absorbing urethane foam lowers, and it is possible that the sound absorbing coefficient in the range of frequencies of 1000 Hz to 3150 Hz lowers. The ratio of the weight of polyol B in the weight of the polyol component (polyol) is, preferably, in a range of 5 wt% to 30 wt%.

The ratio of the weight of polyol B in the weight of the polyol component may be in a range of 5 wt% to 20 wt%, in a range of 5 wt% to 15 wt%, or in a range of 10 wt% to 20 wt%.

The ratio of the weight of polyol A in the weight of the polyol component is, preferably, in a range of 50 wt% to 75 wt%. The ratio of the weight of polyol A in the weight of the polyol component may be in a range of 50 wt% to 80 wt%, in a range of 55 wt% to 75 wt%, in a range of 60 wt% to 75 wt%, or in a range of 65 wt% to 75 wt%.

The ratio of the weight of the other polyol in the weight of the polyol component may be in a range of 10 wt% to 30 wt%, or in a range of 15 wt% to 25 wt%.

The compounding ratio of polyol A, polyol B and the other polyol in the polyol component can be determined by combining, as appropriate, numerical ranges from among the above-described numerical ranges. For example, the ratio of the weight of polyol A can be set in the range of 55 wt% to 75 wt%, the ratio of the weight of polyol B can be set in the range of 5 wt% to 15 wt%, and the ratio of the weight of the other polyol can be set in the range of 15 wt% to 25 wt%.

As the polyisocyanate, it is preferable to use diphenylmethane diisocyanate (MDI: Methylene diphenyl diisocyanate). The diphenylmethane diisocyanate may be monomeric MDI, or polymeric MDI, or a mixture thereof. The polyisocyanate may include only one kind of MDI, or may include two or more kinds of MDI. Since MDI has a better curability than toluene diisocyanate (TDI), MDI is excellent in molding.

The isocyanate index at the time of manufacturing the sound absorbing urethane foam is, for example, in a range of 100 to 250, and, preferably, in a range of 130 to 180. However, as regards the obtained sound absorbing urethane foam, as far as the normal incidence sound absorbing coefficient is 40% or more in the entire range of frequencies of 1000 Hz to 3150 Hz, there is no limitation to the isocyanate index when the urethane foam is manufactured. If the isocyanate index is excessively low, the forming (molding) itself of the urethane foam is difficult, and it is possible that the urethane foam cannot be taken out of the mold. If the isocyanate index is excessively high, only the surface (skin) exists, and an excessively large number of gaps or cavities are present in the inside. In other words, since the foam has a rough mesh structure, when the foam is manufactured by mold forming, the foam is easily broken at a time of demolding.

As the catalyst, a resinification catalyst, an isocyanurating catalyst (trimerization catalyst), a surface-reforming catalyst, a foaming catalyst, and the like can be used. As the respective catalysts, publicly known catalysts that are used for the respective purposes of use can be used.

The resinification catalyst is used, for example, in an amount of 1 part by weight to 3 parts by weight relative to the weight of the polyol component. The isocyanurating catalyst is used, for example, in an amount of 2 parts by weight to 5 parts by weight relative to the weight of the polyol component. The surface-reforming catalyst can be used, for example, in an amount of 0.5 part by weight to 5 parts by weight relative to the weight of the polyol component, and is used preferably in an amount of 1 part by weight to 3 parts by weight. The foaming catalyst is used, for example, in an amount of 0.1 part by weight to 1 part by weight relative to the weight of the polyol component.

As the surface-reforming catalyst, diethanolamine (DEA) is preferably used. DEA has OH groups at both terminals. The OH groups are crosslinked to an NCO group which the isocyanate includes, and thereby the strength of the skeleton of the obtained polyurethane foam is increased. Thus, the moldability is improved or stabilized, and skin peeling can also be suppressed. As a result, die molding with a complex shape can be performed. For example, even in the case of a shape having a small-thickness part, cracks at the time of demolding can be suppressed. In other words, the urethane foam including DEA can achieve excellent moldability also in the mold forming with a complex shape.

As other additives, for example, a foam stabilizer and/or a plasticizer can be added. The foam stabilizer and plasticizer can improve the moldability of polyurethane foam. The other additives are used, for example, in an amount of 5 parts by weight to 30 parts by weight relative to the weight of the polyol component.

As the foaming agent, a publicly known foaming agent used in the manufacture of general polyurethane foams can be used. The foaming agent is, for example, water. As regards the other additives including the foam stabilizer, additives used in the manufacture of general urethane foams can be used.

The density of the sound absorbing urethane foam is, for example, in a range of 70 kg/m³ to 120 kg/m³, and, preferably, in a range of 80 kg/m³ to 100 kg/m³. If the density is in this range, even a urethane foam including a part with a thickness of 15 mm or less can exhibit a practical shock absorbing performance.

The compressive strength of the sound absorbing urethane foam is, for example, in a range of 0.05 MPa to 0.5 MPa.

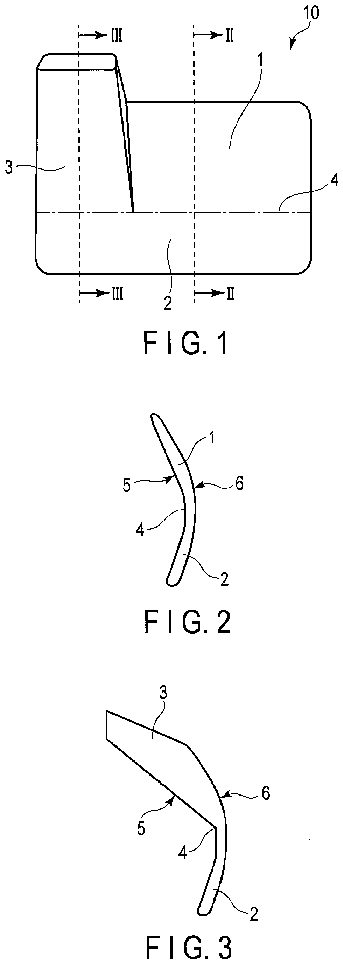

An example of the sound absorbing urethane foam according to the embodiment will be described with reference to FIG. 1 to FIG. 3.

FIG. 1 is a plan view schematically illustrating an example of the sound absorbing urethane foam. FIG. 1 illustrates, by way of example, a case in which the sound absorbing urethane foam is a lower-limb shock absorbing member (foot panel). FIG. 2 is a cross-sectional view schematically illustrating a cross section, taken along line II-II, of the sound absorbing urethane foam shown in FIG. 1. FIG. 3 is a cross-sectional view schematically illustrating a cross section, taken along line III-III, of the sound absorbing urethane foam shown in FIG. 1.

A lower-limb shock absorbing member 10 includes a first portion 1, a second portion 2 and a large-thickness portion 3. The first portion 1, second portion 2 and large-thickness portion 3 are formed as one piece by mold forming using one mold, thus constituting the lower-limb shock absorbing member 10. The lower-limb shock absorbing member 10 can be mounted, for example, on a floor part of an automobile. For example, a floor mat is laid on the lower-limb shock absorbing member 10 that is mounted on the floor part of the automobile. Both feet of a passenger are placed on the lower-limb shock absorbing member via the floor mat.

The first portion 1 and second portion 2 have less thickness than the large-thickness portion 3. The second portion 2 has a substantially rectangular parallelepipedic shape, and includes an end face defined by a boundary portion 4. The first portion 1 and the large-thickness portion 3 extend from the end face that the second portion 2 includes. The lower-limb shock absorbing member 10 is bent such that the boundary portion 4 between the second portion 2, on one hand, and the first portion 1 and large-thickness portion 3, on the other hand, form a valley. The boundary portion 4 forms a valley on one surface of the lower-limb shock absorbing member 10, and forms an arc on the other surface thereof.

The lower-limb shock absorbing member 10 includes a front surface 5 on which the second portion 2, and the first portion 1 and large-thickness portion 3, form a valley. The lower-limb shock absorbing member 10 includes a back surface 6 on which the second portion 2, and the first portion 1 and large-thickness portion 3, form an arc. The large-thickness portion 3 has a convex shape on the front surface 5. Specifically, the large-thickness portion 3 has, on the front surface 5, such a structure that the large-thickness portion 3 projects from the surface of the first portion 1 with reference to the surface of the first portion 1.

When the lower-limb shock absorbing member 10 is mounted on the floor part of the automobile, for example, the right foot of the passenger is placed on the front surface 5 of the first portion 1 and second portion 2, and the left foot of the passenger is placed on the front surface 5 of the second portion 2 and large-thickness portion 3.

The thickness of the first portion 1 and second portion 2 is, for example, 30 mm or less. Each of the first portion 1 and second portion 2 can include a part with a thickness of 15 mm or less. The thickness of this part may be 10 mm or less. The thickness of the large-thickness portion 3 is, for example, 70 mm to 110 mm.

In FIG. 1 to FIG. 3, the case in which the sound absorbing urethane foam is the lower-limb shock absorbing member was described by way of example. However, the purposes of use of the sound absorbing urethane foam are not particularly limited, and the sound absorbing urethane foam is suitably used for purposes of use in which the sound absorbing performance and shock absorbing performance are required. The sound absorbing urethane foam is used for purposes of use, for example, for a door interior cushioning material, a head protecting material, a floor raising material, a tool box, a luggage box, a ceiling material, a sheet core material, a sun visor core material, a pillar core material, and the like. By cutting a foamed body, a sound absorbing urethane foam with a desired shape can also be obtained.

### [Examples]

Examples will be described below. The embodiment is not limited to the Examples described below.

According to compounding formulations shown in Table 1 below, sound absorbing urethane foams relating to Example 1 to Example 17, Example 6A, and Example 7A were manufactured by mold forming. The materials in Table 1 are as follows. In Table 1, the compounding ratios of materials are indicated by parts by weight. It should be noted, however, that "Index" indicates an isocyanate group equivalent (concentration) in a polyisocyanate relative to the total of an active hydroxyl equivalent (concentration) in a polyol, a material including another active hydroxyl group equivalent (concentration), and a hydroxyl group equivalent (concentration) of water.

In addition, according to compounding formulations shown in Table 2 below, sound absorbing urethane foams relating to Example 18 to Example 23 were manufactured by mold forming. The materials in Table 2 are as follows. In Table 2, the compounding ratios of materials are indicated by parts by weight.
(1) Polyol 1; trade name: QB8000 (weight average molecular weight 8000, polyoxyethylene content 80%) manufactured by TOHO Chemical Industry Co., Ltd.
(2) Polyol 2; trade name: EP-901P (weight average molecular weight 7000, polyoxyethylene content 15%) manufactured by Mitsui Chemical & SKC Polyurethanes Inc.
(3) Polyol 3; trade name: NC630 (weight average molecular weight 7400, polyoxyethylene content 14% to 16%) manufactured by The Dow Chemical Company.
(4) Polyol 4; trade name: KC745 (weight average molecular weight 5000, polyoxyethylene content 20% to 25%) manufactured by Sanyo Chemical Industries, Ltd.
(5) Polyol 5; trade name: EP330N (weight average molecular weight 5000, polyoxyethylene content 10% to 12%) manufactured by Mitsui Chemical & SKC Polyurethanes Inc.
(6) Polyol 6; trade name: T-5000D (weight average molecular weight 5000, polyoxyethylene content 0%) manufactured by Mitsui Chemical & SKC Polyurethanes Inc.
(7) Polyol 7; trade name: CP1421 (weight average molecular weight 5000, polyoxyethylene content 75%) manufactured by The Dow Chemical Company.
(8) Polyol 8; trade name: V4053 (weight average molecular weight 12500, polyoxyethylene content 69%) manufactured by The Dow Chemical Company.
(9) Polyol 9; trade name: T-3000S (weight average molecular weight 3000, polyoxyethylene content 0%) manufactured by Mitsui Chemical & SKC Polyurethanes Inc.
(10) Additive A; trade name: EM ALEX DEG-di-O (diethyl glycol dioleate) manufactured by Nippon Nyukazai Co., Ltd.
(11) Additive B; trade name: SF2962 manufactured by Dow Corning Toray Co., Ltd.
(12) Additive C; trade name: VORASURF 1280 additive manufactured by Dow Corning Toray Co., Ltd.
(13) Antioxidant; trade name: Irganox1135 manufactured by BASF Japan Ltd.
(14) Catalyst A; N-(dimethylpropyl) diisopropylamine (DPA: N-N, N' diisopropanolamine (resinification catalyst)
(15) Catalyst B; trade name: TMR7 (trimerization catalyst) manufactured by Air Products Japan K.K.
(16) Catalyst C; diethanolamine (DEA) (surface-reforming catalyst)
(17) Catalyst D; trade name: Niax catalyst A-1 (foaming catalyst) manufactured by Momentive Performance Materials Inc.
(18) Foaming agent; water
(19) Polyisocianate; trade name: Sumidur 44 V 20 L manufactured by Sumika Covestro Urethane Co., Ltd.

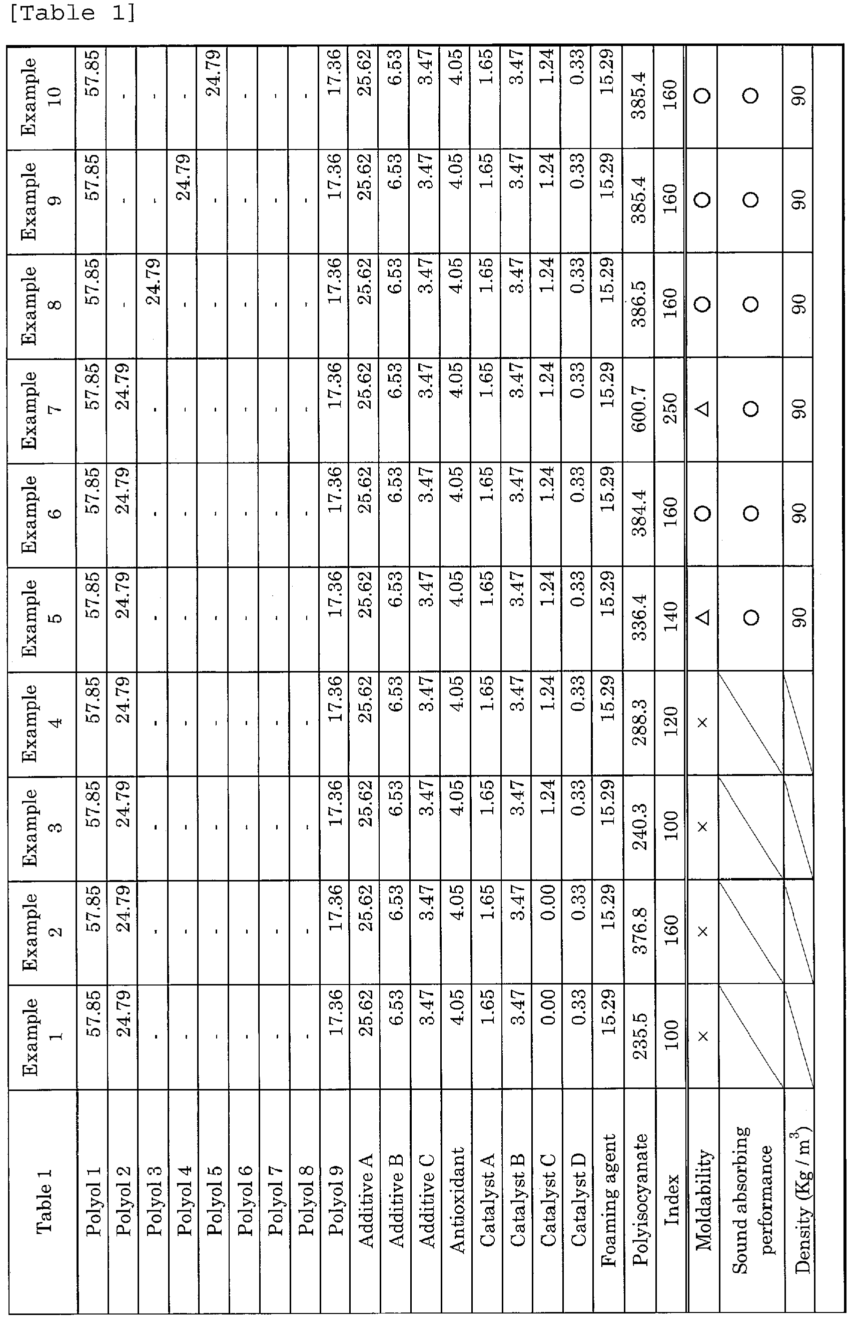

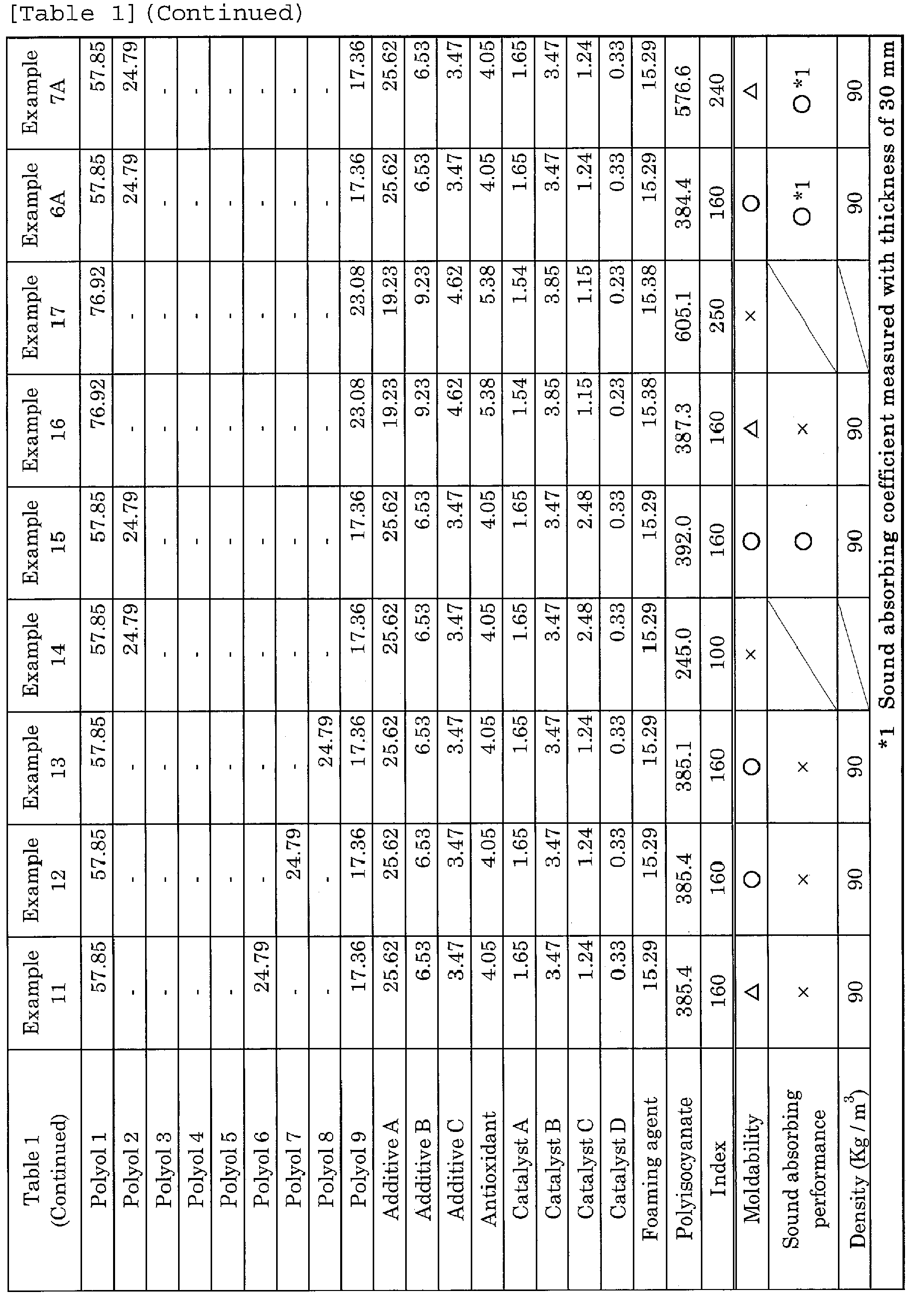

**[Table 2]**

| Table 2 | Example 18 | Example 19 | Example 20 | Example 21 | Example 22 | Example 23 |
|---|---|---|---|---|---|---|
| Polyol 1 | 70.00 | 70.00 | 70.00 | 75.00 | 75.00 | 75.00 |
| Polyol 2 | 5.00 | 7.50 | 10.00 | 5.00 | 7.50 | 10.00 |
| Polyol 3 | - | - | - | - | - | - |
| Polyol 4 | - | - | - | - | - | - |
| Polyol 5 | - | - | - | - | - | - |
| Polyol 6 | - | - | - | - | - | - |
| Polyol 7 | - | - | - | - | - | - |
| Polyol 8 | - | - | - | - | - | - |
| Polyol 9 | 25.00 | 22.50 | 20.00 | 20.00 | 17.50 | 15.00 |
| Additive A | 25.62 | 25.62 | 25.62 | 25.62 | 25.62 | 25.62 |
| Additive B | 6.53 | 6.53 | 6.53 | 6.53 | 6.53 | 6.53 |
| Additive C | 3.47 | 3.47 | 3.47 | 3.47 | 3.47 | 3.47 |
| Antioxidant | 3.88 | 3.88 | 3.88 | 3.88 | 3.88 | 3.88 |
| Catalyst A | 1.65 | 1.65 | 1.65 | 1.65 | 1.65 | 1.65 |
| Catalyst B | 3.47 | 3.47 | 3.47 | 3.47 | 3.47 | 3.47 |
| Catalyst C | 1.24 | 1.24 | 1.24 | 1.24 | 1.24 | 1.24 |
| Catalyst D | 0.55 | 0.55 | 0.55 | 0.55 | 0.55 | 0.55 |
| Foaming agent | 15.29 | 15.29 | 15.29 | 15.29 | 15.29 | 15.29 |
| Polyisocyanate | 313.3 | 313.1 | 312.8 | 312.9 | 312.6 | 312.4 |
| Index | 130 | 130 | 130 | 130 | 130 | 130 |
| Moldability | ○ | ○ | ○ | ○ | ○ | ○ |
| Sound absorbing performance | ○ | ○ | ○ | ○ | ○ | ○ |
| Density (Kg / m³) | 90 | 90 | 90 | 90 | 90 | 90 |

### (Example 1)

According to the compounding formulations shown in Table 1, the materials other than the polyisocyanate, namely the polyol component, additive, antioxidant, catalyst and foaming agent, are compounded (by hand foaming), and polyol-containing mixtures were prepared in disposable cups. The polyol component according to Example 1 includes polyol 1, polyol 2 and polyol 9. It is assumed that the obtained polyol-containing mixture is A liquid. The temperature of A liquid is control to become 37°C ± 2°C. In addition, a polyisocyanate is prepared as B liquid, and the temperature of B liquid was controlled to become 37°C ± 2°C.

A mold for fabricating a sample, which has inside dimensions of 350 mm in width, 350 mm in depth and 10 mm in height, is prepared, and the mold is heated in a range of 65°C to 70°C to keep temperatures. Note that temperatures were measured by a surface thermometer. The mold is composed of a lower die having a bottomed rectangular cylindrical shape with only an upper surface being opened, and an upper mold which can close this upper surface.

Next, B liquid was added to A liquid prepared in the disposable cup, and the resultant was stirred and mixed over 5 seconds, thus obtaining a mixture solution. Here, when the total parts by weight of the polyol component is 100, the parts by weight of A liquid including the polyol component was 160.4 parts by weight, and the parts by weight of B liquid was 235.5 parts by weight. The obtained mixture solution was immediately poured into the lower die of the mold, and was cured over 6 minutes by closing the upper surface of the lower die by using the upper die. During this time, the surface temperature of the mold is kept in a range of 65°C to 70°C. Thereafter, the cured material was removed from the mold, and left to stand for two days at normal temperatures, and a sound absorbing urethane foam having a size of 350 mm × 350 mm × 10 mm was obtained.

### (Example 2)

A sound absorbing urethane foam was obtained by the same method as in Example 1, except that the index was changed to 160 by changing the compounding amount of the polyisocyanate in the compounding formulation to 376.8 parts by weight.

### (Example 3)

A sound absorbing urethane foam was obtained by the same method as in Example 1, except that the compounding amount of catalyst C (DEA) was set to 1.24 parts by weight.

### (Example 4)

A sound absorbing urethane foam was obtained by the same method as in Example 3, except that the index was changed to 120 by changing the compounding amount of the polyisocyanate in the compounding formulation to 288.3 parts by weight.

### (Example 5)

A sound absorbing urethane foam was obtained by the same method as in Example 3, except that the index was changed to 140 by changing the compounding amount of the polyisocyanate in the compounding formulation to 336.4 parts by weight.

### (Example 6)

A sound absorbing urethane foam was obtained by the same method as in Example 3, except that the index was changed to 160 by changing the compounding amount of the polyisocyanate in the compounding formulation to 384.4 parts by weight.

### (Example 7)

A sound absorbing urethane foam was obtained by the same method as in Example 3, except that the index was changed to 250 by changing the compounding amount of the polyisocyanate in the compounding formulation to 600.7 parts by weight.

### (Example 8)

A sound absorbing urethane foam was obtained by the same method as in Example 6, except that polyol 3 was used in place of polyol 2.

### (Example 9)

A sound absorbing urethane foam was obtained by the same method as in Example 6, except that polyol 4 was used in place of polyol 2.

### (Example 10)

A sound absorbing urethane foam was obtained by the same method as in Example 6, except that polyol 5 was used in place of polyol 2.

### (Example 11)

A sound absorbing urethane foam was obtained by the same method as in Example 6, except that polyol 6 was used in place of polyol 2.

### (Example 12)

A sound absorbing urethane foam was obtained by the same method as in Example 6, except that polyol 7 was used in place of polyol 2.

### (Example 13)

A sound absorbing urethane foam was obtained by the same method as in Example 6, except that polyol 8 was used in place of polyol 2.

### (Example 14)

A sound absorbing urethane foam was obtained by the same method as in Example 1, except that the compounding amount of catalyst C (DEA) was set to 2.48 parts by weight.

### (Example 15)

A sound absorbing urethane foam was obtained by the same method as in Example 14, except that the index was changed to 160 by changing the compounding amount of the polyisocyanate in the compounding formulation to 392.0 parts by weight.

### (Example 16)

A sound absorbing urethane foam was obtained by the same method as in Example 1, except that the compounding ratio of the materials was changed as indicated in the column of Example 16 in Table 1.

### (Example 17)

A sound absorbing urethane foam was obtained by the same method as in Example 16, except that the index was changed to 250 by changing the compounding amount of the polyisocyanate in the compounding formulation to 605.1 parts by weight.

### (Example 6A)

A sound absorbing urethane foam was obtained by the same method as in Example 6, except that a mold for fabricating a sample with inside dimensions of 350 mm in width, 350 mm in depth and 30 mm in height was used.

### (Example 7A)

A sound absorbing urethane foam was obtained by the same method as in Example 6A, except that the index was changed to 240 by changing the compounding amount of the polyisocyanate in the compounding formulation to 576.6 parts by weight.

### (Example 18 to Example 23)

Sound absorbing urethane foams were obtained by the same method as in Example 1, except that the compounding ratios of the materials were changed as indicated in Table 2.

### <Evaluation of Moldability>

With respect to the sound absorbing urethane foams obtained in Example 1 to Example 23, and Example 6A and Example 7A, moldability (curability) was evaluated by sensory evaluation. An urethane foam in a good state at a time of demolding was evaluated as "○". An urethane foam in a state, in which a mark of a finger was left after demolding by the hand ("deficient curing") or in which a design surface was peeled, was evaluated as "Δ". An urethane foam, which was in a collapsed state or in a serious undercure state, was evaluated as "×". Among Examples 1 to 23, Examples 6, 8-10, 12, 13, 15 and 18-23 with curability "○" had design surfaces on both surfaces of masses with a thickness of 10 mm. Details of the evaluation "×" include, for example, a case where strings are drawn when demolding is tried, a case where the foam is crumbly and fragile, and a case where cells in the foam are corrupted and depressed. Note that if a design surface is peeled at a time of demolding, the sound absorbing performance and air permeability vary, and there is a tendency that it is difficult to obtain urethane foams having stable sound absorbing performances when urethane foams are manufactured by successive operations. Therefore, it is preferable that urethane foams are cured such that design surfaces are not peeled at a time of demolding.

### <Evaluation of Sound Absorbing Performance>

According to the method of measuring the normal incidence sound absorbing coefficient described in the embodiment, the sound absorbing performance of the sound absorbing urethane foam according to each Example was evaluated. Urethane foams having normal incidence sound absorbing coefficients of 40% or more in the entire range of frequencies of 1000 Hz to 3150 Hz were evaluated as "○", and urethane foams having normal incidence sound absorbing coefficients of less than 40% in the range of frequencies of 1000 Hz to 3150 Hz were evaluated as "×". However, as regards the urethane foams evaluated as "×" in the above moldability evaluation, sound absorbing performances were not evaluated since sound absorbing performances cannot properly be evaluated. In table 1, in the row of "Sound absorbing performance", Examples in which evaluation was not conducted are indicated by oblique lines.

As shown in Table 1 and Table 2, the sound absorbing urethane foams according to Examples 5-13, 15-16, 18-23, 6A and 7A had practical moldability. Specifically, the evaluation of moldability of these Examples were "○" or " Δ". Therefore, the sound absorbing performance evaluation could be conducted.

In addition, as shown in Table 1, as regards Example 6A and Example 7A, the thickness of the urethane foams of the targets of evaluation is 30 mm.

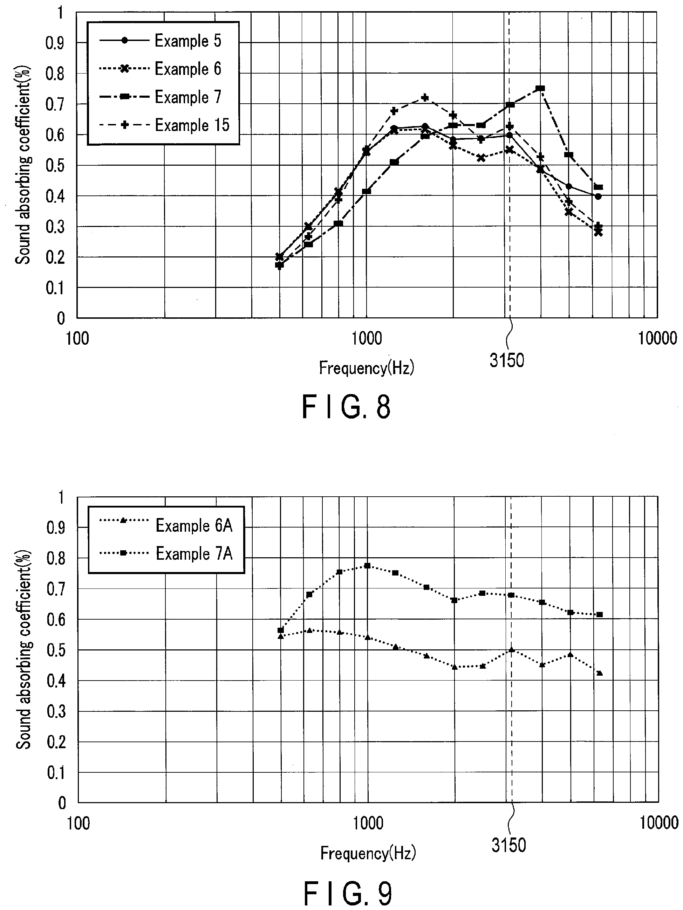

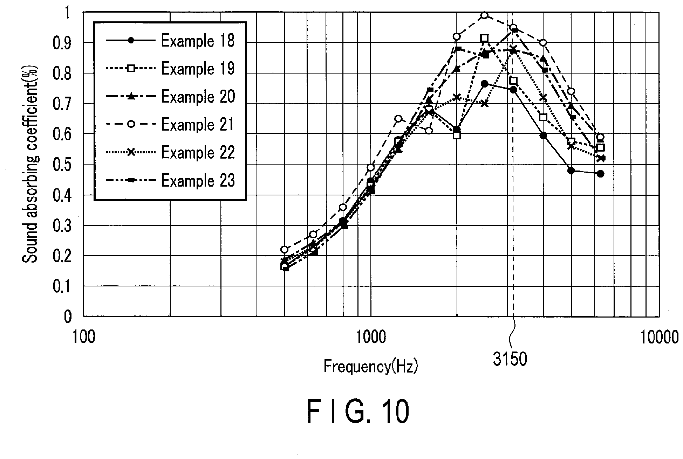

FIG. 6 to FIG. 10 show sound absorbing coefficient graphs with respect to Examples 5-13, 15-16, 18-23, 6A and 7A in which the sound absorbing coefficients could be measured. FIG. 6 shows results of Examples 6, and 8-10. FIG. 7 shows results of Examples 6, 11-13, and 16. FIG. 8 shows results of Examples 5-7, and 15. FIG. 9 shows results of Examples 6A and 7A. FIG. 10 shows results of Examples 18 to 23. In the respective sound absorbing coefficient graphs, the ordinate axis indicates a frequency (Hz), and the abscissa axis indicates a sound absorbing coefficient (%).

### <Density Measurement>

The densities of the urethane foams according to the respective Examples were measured and found to be 90 kg/m³.

The density was evaluated according to the measuring method stipulated in JIS K 7222: 2005.

FIG. 6 shows the sound absorbing coefficient measurement results of the sound absorbing urethanes according to Examples 6 and 8-10 having the common index of 160. These Examples are Examples in which polyols corresponding to the above-described polyol B were changed. The sound absorbing urethane foams according to Examples 6 and 8-10 included, as polyol components, polyol 2 (EP-901P), polyol 3 (NC630), polyol 4 (KC745) and polyol 5 (EP330N). Since each of these polyols has a weight average molecular weight in the range of 4000 to 12000 and an ethylene oxide content in the range of 5 wt% or more to less than 50 wt%, the obtained sound absorbing urethane foam had the normal incidence sound absorbing coefficient of 40% or more in the entire range of frequencies of 1000 Hz to 3150 Hz.

FIG. 7 shows the sound absorbing coefficient measurement results of the sound absorbing urethanes according to Examples 6, 11-13 and 16, which also have the common index of 160. Unlike Examples 6 and 8-10, the sound absorbing urethane foams according to Examples 11 to 13 did not include the polyol components corresponding to polyol B. Instead, the sound absorbing urethane foams according to Examples 11 to 13 included polyol components having ethylene oxide contents of 50 wt% or more. Thus, the air permeability of the obtained sound absorbing urethane foam increases, the conversion of incident waves to thermal energy in the urethane decreases, and the incident waves are not easily absorbed. Hence, it is considered that the sound absorbing coefficients in the range of 1000 Hz to 3150 Hz with respect to Examples 11 to 13 are poorer than in Example 6. In addition, the sound absorbing urethane foam according to Example 16 included, as polyol components, only polyol 1 (QB8000) having a weight average molecular weight of 4000 or more and an ethylene oxide content of 80%, and polyol 9, and therefore it is possible that there are many open cells and the sound absorbing performance was poor in the low frequency range.

FIG. 8 shows the sound absorbing coefficient measurement results of the sound absorbing urethanes according to Examples 5-7 and 15. Examples 5-7 and 15 are Examples in which sound absorbing urethane foams were manufactured by the same formulation, except for the conditions of the content of catalyst C (DEA) and the index. Each of these Examples had a normal incidence sound absorbing coefficient of 40% or more in the entire range of frequencies of 1000 Hz to 3150 Hz. Example 7, in which the index is 250, had a poorer sound absorbing coefficient at 1000 Hz than Examples 5, 6 and 15. On the other hand, of these Examples, Example 7 had a most excellent sound absorbing coefficient at 3150 Hz. From this, it is understood that there is a tendency that, by increasing the index, the frequency range in which sound can efficiently be absorbed changes from the low frequency range to a high frequency range of about 2000 Hz to 6000 Hz.

The formulation of Example 6A is identical to that of Example 6. In addition, the formulation of Example 7A is substantially identical to that of Example 7, except that the index is 240. As is clear from FIG. 9, if the thickness of the mass is set to 30 mm at the time of sound absorption coefficient measurement, the sound absorption coefficient at less than 2000 Hz remarkably increases. From a different viewpoint, it is understood that when the thickness of the mass is set at 10 mm, there arises a problem that the sound absorbing coefficient in the low frequency range remarkably lowers. Even when the thickness of the mass is 10 mm, the sound absorbing urethane foam according to the embodiment has a normal incidence sound absorbing coefficient of 40% or more in the entire range of frequencies of 1000 Hz to 3150 Hz, and therefore the sound absorbing urethane foam has an excellent sound absorbing performance.

In Examples 1 to 15 and Examples 6A and 7A shown in Table 1, the content ratio of polyol 1 corresponding to polyol A in the polyol component was 57.85 wt%. On the other hand, in Examples 18 to 23 shown in Table 2, the content ratio of polyol 1 corresponding to polyol A in the polyol component was 70 wt% to 75 wt%. In this manner, even when the content ratio of polyol A in the polyol component was increased, the moldability of the obtained sound absorbing urethane foam was excellent, and the normal incidence sound absorbing coefficient was 40% or more in the entire range of frequencies of 1000 Hz to 3150 Hz. For example, when the ratio of the weight of polyol A in the weight of the polyol component is in a range of 35 wt% to 80 wt%, the sound absorbing urethane foam that is excellent in sound absorbing performance can be obtained.

In Examples 1 to 15 and Examples 6A and 7A shown in Table 1, the content ratio of polyols 2 to 8 corresponding to polyol B in the polyol component was 24.79 wt%. On the other hand, in Examples 18 to 23 shown in Table 2, the content ratio of polyol 2 corresponding to polyol B in the polyol component was 5 wt% to 10 wt%. In this manner, even when the content ratio of polyol B in the polyol component was decreased, the moldability of the obtained sound absorbing urethane foam was excellent, and the normal incidence sound absorbing coefficient was 40% or more in the entire range of frequencies of 1000 Hz to 3150 Hz. For example, when the ratio of the weight of polyol B in the weight of the polyol component is in a range of 5 wt% to 40 wt%, the sound absorbing urethane foam that is excellent in sound absorbing performance can be obtained.

FIG. 10 shows sound absorbing coefficient measurement results of the sound absorbing urethane foams according to Examples 18 to 23. As shown in the graph of FIG. 10, the normal incidence sound absorbing coefficient of each of the sound absorbing urethane foams according to Examples 18 to 23 was 40% or more in the entire range of frequencies of 1000 Hz to 3150 Hz.

The present invention is not limited to the above-described embodiments. Various modifications can be made in practice without departing from the spirit of the invention. The embodiments can be combined as appropriate, and the combined advantages can be obtained in such cases. Furthermore, each embodiment includes various inventions, and various inventions can be derived from combinations selected from among structural elements disclosed herein. For example, even when some structural elements are omitted from all the structural elements disclosed in the embodiments, if the object can be solved and advantageous effects can be obtained, the structure from which the structural elements are omitted can be extracted as an invention.

## Claims

1. A sound absorbing urethane foam in which a normal incidence sound absorbing coefficient at a time when a diameter is 29 mm and a thickness is 10 mm is 40% or more in an entire range of frequencies of 1000 Hz to 3150 Hz.

2. The sound absorbing urethane foam according to claim 1, wherein
the sound absorbing urethane foam comprises a part with a thickness of 15 mm or less, and
in the part, the normal incidence sound absorbing coefficient at the time when the diameter is 29 mm and the thickness is 10 mm is 40% or more in the entire range of frequencies of 1000 Hz to 3150 Hz.

3. The sound absorbing urethane foam according to claim 1 or 2, wherein the sound absorbing urethane foam comprises diethanolamine.

4. The sound absorbing urethane foam according to claim 1 or 2, wherein
the sound absorbing urethane foam is obtained by foaming in a reaction system comprising a polyol, a polyisocyanate, a foaming agent, a catalyst, and an additive, and
the polyol comprises a polyol B having a weight average molecular weight in a range of 4000 to 12000, and having an ethylene oxide content in a range of 5 wt% or more to less than 50 wt%.

5. The sound absorbing urethane foam according to claim 4, wherein a ratio of a weight of the polyol B in a weight of the polyol is in a range of 5% to 40%.

6. The sound absorbing urethane foam according to claim 4 or 5, wherein
the polyol further comprises a polyol A having a weight average molecular weight in a range of 2000 to 12000, and having an ethylene oxide content of 50 wt% or more, and
a ratio of a weight of the polyol A in a weight of the polyol is in a range of 35% to 80%.
